# EUROPEAN PATENT APPLICATION

(11) **EP 1 462 669 A2**
(43) Date of publication of application: **29.09.2004**
(21) Application number: 04007115.1
(22) Date of filing: 24.03.2004
(51) Int. Cl.: F16C 33/64

(54) **Rolling bearings**

(30) Priority: 26.03.2003 JP 2003085309
(71) Applicant: NTN CORPORATION, Osaka (JP)
(72) Inventor: Maeda, Kikuo, Kuwana-shi Mie (JP); Matsubara, Yukio, Kuwana-shi Mie (JP)
(74) Representative: Grünecker, Kinkeldey, Stockmair & Schwanhäusser Anwaltssozietät

(57) **Abstract**

An inexpensive rolling bearing is proposed which can be used stably for a long time even for applications where the lubricating conditions are severe or bending stresses act. Inner and outer rings of rolling bearings mounted in a rocker arm of an automobile are made of high-carbon chrome bearing steel. They are subjected to heat treatment in which after carbonitriding, high-temperature tempering is carried out. Then they are induction hardened to impart resistance to material quality change and a compressive stress of not less than 200 MPa to the surface layer, thereby markedly improving the rolling contact fatigue life and the tension-compression fatigue strength while keeping the material cost as before. Thus, this bearing can be used stably for a long time even though it is a full compliment type, lubricating conditions tend to worsen and the outer ring is repeatedly subjected to bending stress from the cam.

## Description

### BACKGROUND OF THE INVENTION

This invention relates to rolling bearings used for applications where lubricating conditions are severe or bending stress acts, such as bearings for rocker arms of automobiles.

In recent years, in machines such as automobiles, for lower fuel consumption or freedom from maintenance, bearings are often operated under harsher lubricating conditions than before, e.g. with lubricating oil having low viscosity or used for a long period of time without renewing lubricating oil. In bearings used for applications where lubricating conditions are severe, no suitable oil film is sometimes formed between bearing rings and rolling elements, so that due to surface heat buildup or metallic contact, required life is not met.

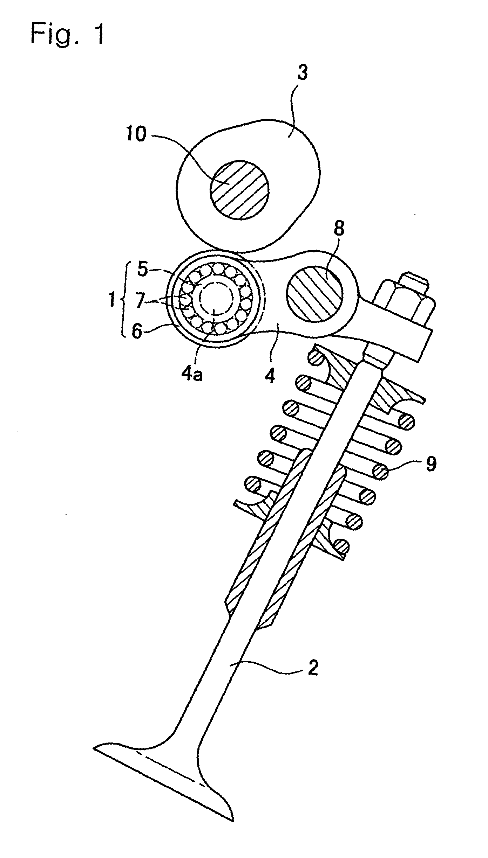

In particular, in full compliment roller bearings, since the amount of lubricating oil supplied into between the bearing rings and the rollers tends to be insufficient, peeling from the surface of a bearing ring tends to occur. For example, in bearings for automotive rocker arms as shown in Fig. 1, which shows an embodiment of the present invention, or in needle bearings, the working life often shortens markedly because peeling develops in the inner ring (or shaft integrally formed with the inner ring).

On the other hand, because in the future, rolling bearings are used at higher loads as driving performance of machinery improves, it is expected that the problem of cracking of bearings will become manifest. In particular, since bearings that receive loads, not enclosed in housings, such as bearings for rocker arms, or bearings enclosed in a thin housing are exposed to bending stress repeatedly during use, the possibility is high that cracks due to fatigue may pose a problem.

To solve problems that arise due to increasingly harsher use conditions of rolling bearings as described above, if attempts are made to cope with such problems by changing the bearing material, the material cost would increase markedly. Thus, measures that will incur little cost increase are required by improving heat treatment procedures.

As one measure from heat treatment aspect, carbonitriding treatment is known. Carbonitriding is a technique in which nitrogen and carbon are infiltrated by diffusion through the surface of a steel material to impart the resistance to material quality change (resistance to micro-structural change and hardness softening) to the surface layer, thereby prolonging the life of the material. Its application has expanded to inner and outer rings of bearings made of bearing steel, carburized steel and carbon steel for machine structure, which are known as ordinary materials for bearing.

But since carbonitriding is a technique of diffusing through the material surface, a long time is taken to obtain a required carbo-nitrided depth. Thus, carbo-nitrided materials still have problems that the structure of the surface layer tends to be rough, or the crystal grains of the entire material tend to be large, thus lowering the fatigue strength.

Further, regarding bearings for rocker arms, JP patent publication 2002-194438 discloses a method of improving the wear resistance by changing carbon concentration distributions on the outer peripheral surface and the rolling surfaces to prevent wear of the outer ring due to contact with the mating cam, or controlling the carbon concentration and hardness of the surface layer of a shaft formed integral with the inner ring (shaft subjected to induction hardening after carburizing or carbonitriding) and the hardness of its interior. But there have been no technique which has paid attention to the rolling life or resistance to cracking.

An object of this invention is to provide inexpensive rolling bearings which can be used stably for a long time even for applications where the lubricating conditions are severe or ones where bending stresses act.

### SUMMARY OF THE INVENTION

According to this invention, there is provided a rolling bearing comprising an inner ring and an outer ring made of a bearing steel, a carburized steel or a carbon steel for mechanical structures, and a plurality of rolling elements mounted between the inner ring and the outer ring, wherein to the surface layer of at least one of the inner ring and the outer ring, a compressive stress of not less than 200 MPa is imparted by heat treatment including carbonitriding and induction hardening.

That is, by subjecting at least the inner ring or the outer ring to induction hardening after carbonitriding, and imparting resistance to material quality change and a high compressive stress of not less than 200 MPa to the surface, it is possible to improve resistance to damage to the surface while keeping the material cost unchanged compared to the prior art bearing, thereby simultaneously achieving extended rolling contact fatigue life and improved fatigue strength.

At this time, the bearing ring to be subjected to the heat treatment has preferably a tempering hardness at 500°C of not less than Hv 550 in the surface layer thereof from the viewpoint of the rolling fatigue life, and has a prior austenite grain diameter of not less than Gc 10 in the surface layer in view of the fatigue strength.

Further, if high-temperature tempering is carried out between carbonitriding and induction hardening, the entire bearing rings will have low hardness when tempered, so that it is possible to further increase the compressive stress in the surface layer which is imparted by the subsequent induction hardening. Thus it is possible to further improve the rolling contact fatigue life and fatigue strength.

This invention can be effectively applied to rolling bearings in which said rolling elements are rollers that are arranged in a full compliment arrangement.

The effect of application of this invention is large for bearings for a rocker arm of an automobile, which are used under severe lubricating conditions and in which bending stresses act repeatedly during use.

### BRIEF DESCRIPTION OF THE DRAWINGS

Other features and objects of the present invention will become apparent from the following description made with reference to the accompanying drawings, in which:
Fig. 1 is a front sectional view showing how the rolling bearing of an embodiment is mounted in a rocker arm.

### DETAILED DESCRIPTION OF THE PREFERRED EMBODIMENT

With reference to Fig. 1, the embodiment of this invention will be described. Fig. 1 shows the rolling bearing 1 of the embodiment mounted in a rocker arm 4 disposed between an engine valve 2 of an automobile and a cam 3 for opening and closing the valve 2. The rolling bearing 1 comprises an inner ring 5 fitted on a fixed shaft 4a of the rocker arm 4, an outer ring 6 facing the cam 3, and a plurality of rollers 7 arranged between the bearing rings 5 and 6 in a full state. On the other hand, the rocker arm 4 has its central portion mounted on a pivotable rocker shaft 8, and has one end thereof coupled to the engine valve 2 so as to be biased downwardly in the figure by a valve spring 9, thereby pressing the outer periphery of the outer ring 6 of the bearing 1, which is mounted at the other end, against the cam 3. Thus, as the cam 3 rotates about its axis together with its camshaft 10, the rocker arm 4 will pivot through the bearing 1, so that the valve 2 moves up and down, i.e. closes and opens.

The inner ring 5, outer ring 6 and rollers 7 of the rolling bearing 1 are all made of high-carbon chrome bearing steel. During heat treatment, the rollers 7 are subjected to ordinary carbonitriding only, while the inner and outer rings 5 and 6 are subjected to carbonitriding, tempering at high temperature, and then induction hardening. By this heat treatment, a compressive stress not less than 200 MPa is imparted to the surface layers of the bearing rings 5 and 6, and the tempering hardness of the surface layer at 500 °C will be not less than Hv 550. As a result, the rolling contact fatigue life and the tension-compression fatigue strength will markedly improve. By controlling the prior austenite grain diameter in the surface layer as fine as not less than Gc 10 by properly setting the temperature during induction hardening, the outer ring 6 has higher tension-compression fatigue strength than the inner ring 5.

Thus, in spite of the fact that this bearing 1 is a full compliment type and used under easy-to-worsen lubricating conditions and exposed to bending stress and contact stress repeatedly, no premature surface peeling or cracks will develop in the bearing rings 5 and 6. Thus the bearing 1 can be stably used for a long period. Thus, it can cope with increased harshness in lubricating and loading conditions and improve the performance of automobiles.

In the above embodiment, for both the inner and outer rings, a compressive stress not less than 200 MPa is imparted to their surface layers by subjecting both of them to heat treatment in which high-temperature tempering and induction heating are carried out after carbonitriding. But only one of them may be subjected to such heat treatment. According to applications and use conditions of the bearing, high-temperature tempering among three heat treatment steps may be omitted.

The material of the bearing rings, which are subjected to carbonitriding and induction heating, are not limited to bearing steel, but carburized steel and carbon steel for mechanical structures may be used.

Next, experiments conducted to confirm the performance of the bearing according to the present invention will be described.

### (1) Rolling contact fatigue life comparison experiment

In this experiment, for full compliment needle roller bearings in which the inner ring is integral with the shaft, their rolling fatigue life was examined. For the experiment, seven bearings having inner rings which are different in material and heat treatment were prepared including comparative examples. Each bearing had an inner ring (shaft) of 14.64 mm outer diameter x 17.3 mm wide, an outer ring of 18.64 mm inner diameter x 24 mm outer diameter x 6.9 mm wide, and 26 rollers of 2 mm outer diameter x 6.8 mm long. The materials and heat treatments of the inner rings (shafts) are shown in Table 1 together with the results of the experiment. The outer rings and rollers were made of high-carbon chrome bearing steel and were subjected to normal carbonitriding.

Among the heat treatments for the inner rings (shafts) shown in Table 1, the carbonitriding for bearing steels of Examples (No. 1, No. 3) was carried out in an atmosphere having the carbon potential of 1.1-1.2% and the ammonia concentration of 5%, at a temperature of 850 °C for 90 minutes to form a carbonitrided layer having a depth of about 0.3 mm, and then oil quenching was carried out. The carbon concentration in the surface layer after carbonitriding was 1.05-1.1% and the nitrogen concentration was about 0.25%.

On the other hand, for carbonitriding of carburized steel (No. 2, No. 4), in the heating time of 400 minutes at 920 °C, for the first 250 minutes, only carburization was carried out in an atmosphere having the carbon potential of 1.0%, and for the last 150 minutes, carbonitriding was carried out in an atmosphere having the carbon potential of 0.8% and the ammonia concentration of 7% to form a carburized and hardened layer having a depth of about 1.5 mm and a carbonitrided layer having a depth of about 0.3 mm, and then oil quenching was carried out. After the treatment, the carbon concentration in the surface layer was about 1.0% and the nitrogen concentration was about 0.35%.

In the induction hardening (No. 1-4) after the carbonitriding for each Example, a hardened layer having a depth of about 1 mm was formed. When high-temperature tempering was carried out between carbonitriding and induction hardening (No. 3 and No. 4), the tempering temperature was 600 °C.

In contrast, among Comparative Examples, for standard heat treatment for bearing steel (No. 5), after heating at 850 °C for 45 minutes in an atmosphere having the carbon potential of 0.9%, oil quenching was carried out. Conditions of carbonitriding for bearing steel (No. 6) were the same as those of Examples (No. 2 and No. 4). In the standard carburizing for carburized steel (No. 7), in the heating time of 400 minutes at 920 °C, for the first 250 minutes, carburizing in an atmosphere having the carbon potential of 1.0%, and for the last 150 minutes, diffusing in an atmosphere having the carbon potential of 0.8% was carried out, and then oil quenching was carried out.

These bearings were set in an outer ring rotating type life tester and the time taken until peeling occurred in the surface layer of each inner ring (shaft) was measured under the following conditions:

### (Test conditions)

Load: 2.58 kN (30% of basic dynamic rated load)
Outer ring rotating speed: 7000 rpm
Lubricating oil: engine oil (10W-30)
Lubricating oil temperature: 100 °C

The time taken until surface layer peeling occurred in the inner ring (shaft) of each bearing was converted to a ratio with reference to the standard heat-treated article of bearing steel (No. 5), and was shown in Table 1 as the rolling fatigue life ratio.

As is apparent from Table 1, in each Example, in the surface layer of the inner ring (shaft), a compressive stress of not less than 200 MPa and a 500 °C tempering hardness of not less than Hv 550 were ensured. Thus the rolling contact fatigue life was 3.5 times that of the standard article (No. 5) or over. Further, among the Examples, those in which high-temperature tempering was carried out between carbonitriding and induction hardening (No. 3 and No. 4) were high in compressive stress and long in life compared with those in which the kind of steel was the same but no high-temperature tempering was carried out (No. 1 and No. 2).

### (2) Tension-compression fatigue life comparison experiment

In this experiment, a total of seven kinds (four each) of ring test specimens that differed in material and heat treatment were prepared. Dimensions of each test piece were 45 mm inner diameter x 60 mm outer diameter x 15 mm wide. The material and heat treatment are shown in Table 2 together with the results of the experiment. The contents of the heat treatment for each of the Examples and Comparative Examples are the same as those described about Table 1.

Each of these test pieces was set on a ring rotating type fatigue life tester, and loads were applied repeatedly while rotating under the following test conditions, and the number of loadings repeated until cracks developed were measured.

### (Test conditions)

Load: 9.8 kN
Load speed: 8000 cpm
Lubricating oil: turbine oil (VG68)

The number of loadings repeated until each test piece cracked was converted to a ratio with reference to the standard heat-treated article of bearing steel (No. 5), and shown in Table 2 as a tension-compression fatigue life ratio. The numerical values in Table 2 are average values for four test pieces of each kind.

As is apparent from Table 2, each Example showed the compressive stress in the surface layer of not less than 200 MPa, and the 500 °C tempering hardness of not less than Hv 550, and the prior austenite grain diameter of not less than Gc 10. This shows that the tension-compression fatigue life markedly improved compared to the standard article (No. 5).

As described above, according to this invention, by subjecting at least one of the inner ring and the outer ring of the rolling bearing to induction hardening after carbonitriding, resistance to material quality change and a high compressive stress of not less than 200 MPa are imparted. Thus, it is possible to markedly improve the rolling fatigue life and the crack fatigue strength with no increase in the cost of the bearing material.

Thus, the rolling bearing to which this invention is applied can be used stably for a long time even in applications where lubricating conditions are severe or in applications where bending stresses act. Thus it is possible to cope with severer lubricating and load conditions expected in the future.

**TABLE 1**

| | No. | Material | Heat treatment | Hardness (Hv) | Compressive stress (Mpa) | Tempering hardness at 500°C (Hv) | Rolling contact fatigue life ratio |
|---|---|---|---|---|---|---|---|
| Ex. | 1 | Bearing steel | Carbonitriding + induction hardening | 770 | 230 | 600 | 3.5 |
| | 2 | Carburized steel | Carbonitriding + induction hardening | 750 | 450 | 620 | 3.8 |
| | 3 | Bearing steel | Carbonitriding + high temperature tempering + induction hardening | 850 | 370 | 610 | 4.6 |
| | 4 | Carburized steel | Carbonitriding + high temperature tempering + induction hardening | 830 | 520 | 630 | 5.0 |
| Comp. Ex. | 5 | Bearing steel | Standard heat treatment | 740 | 0 | 470 | 1.0 |
| | 6 | Bearing steel | Carbonitriding | 780 | 120 | 580 | 1.9 |
| | 7 | Carburized steel | Standard carburizing | 720 | 290 | 480 | 1.3 |

**TABLE 2**

| | No. | Material | Heat treatment | Hardness at surface layer (Hv) | Compressive stress (Mpa) | Tempering hardness at 500°C (Hv) | Prior austenite grain size (Gc) | Tension-compression fatigue life ratio |
|---|---|---|---|---|---|---|---|---|
| Ex. | 1 | Bearing steel | Carbonitriding + induction hardening | 780 | 200 | 610 | 11 | 3.7 |
| | 2 | Carburized steel | Carbonitriding + induction hardening | 770 | 420 | 600 | 10 | 4.9 |
| | 3 | Bearing steel | Carbonitriding + high temperature tempering + induction hardening | 840 | 350 | 580 | 11 | 4.0 |
| | 4 | Carburized steel | Carbonitriding + high temperature tempering + induction hardening | 820 | 590 | 610 | 10 | 5.3 |
| Comp. Ex. | 5 | Bearing steel | Standard heat treatment | 740 | 50 | 470 | 9~10 | 1.0 |
| | 6 | Bearing steel | Carbonitriding | 760 | 120 | 590 | 8~9 | 2.2 |
| | 7 | Carburized steel | Standard carburizing | 720 | 340 | 470 | 4~8 | 2.8 |

## Claims

1. A rolling bearing comprising an inner ring and an outer ring made of a bearing steel, a carburized steel or a carbon steel for mechanical structures, and a plurality of rolling elements mounted between said inner ring and said outer ring, wherein to the surface layer of at least one of said inner ring and said outer ring, a compressive stress of not less than 200 MPa is imparted by heat treatment including carbonitriding and induction hardening.

2. A rolling bearing as claimed in claim 1 wherein among said inner and outer rings, one that has been subjected to said heat treatment has a tempering hardness at 500 °C of not less than Hv 550 in the surface layer thereof.

3. A rolling bearing as claimed in claim 1 or 2 wherein among said inner and outer rings, one that has been subjected to said heat treatment has a prior austenite grain diameter of not less than Gc 10 in the surface layer thereof.

4. A rolling bearing as claimed in any of claims 1-3 wherein said heat treatment includes high-temperature tempering between carbonitriding and induction hardening.

5. A rolling bearing as claimed in any of claims 1-4 wherein said rolling elements are rollers and are arranged in a full compliment arrangement.

6. A rolling bearing as claimed in any of claims 1-5 mounted in a rocker arm of an automobile.
